# EUROPEAN PATENT SPECIFICATION

(11) **EP 1 793 315 B1**
(45) Date of publication and mention of the grant of the patent: **17.02.2010**
(21) Application number: 06121182.7
(22) Date of filing: 25.09.2006
(51) Int. Cl.: G06F 13/40

(54) **Combination apparatus capable of data communication between host devices and method thereof**
Kombigerät mit Funktion zur Datenkommunikation zwischen Host-Geräten und entsprechendes Verfahren
Appareil de combinaison permettant de communiquer des données entre des dispositifs hôtes, et procédé correspondant

(30) Priority: 05.12.2005 KR 20050117637
(43) Date of publication of application: 06.06.2007
(73) Proprietor: Samsung Electronics Co., Ltd., Suwon-si, Gyeonggi-Do (KR)
(72) Inventor: Lee, Ho-shin, Gyeonggi-do (KR)
(74) Representative: Grünecker, Kinkeldey, Stockmair & Schwanhäusser Anwaltssozietät

(56) References cited:
- EP-A- 0 890 905
- EP-A2- 0 883 066
- GB-A- 2 405 714
- JP-A- 3 231 798
- JP-A- 63 201 987
- US-A- 5 297 231
- US-A- 5 309 567
- US-A- 5 490 283
- US-A- 5 982 359
- US-A1- 2003 005 185
- US-A1- 2004 122 988
- US-A1- 2005 015 260
- US-A1- 2005 033 880
- US-B1- 6 205 499
- US-B1- 6 434 648

## Description

The present invention relates to a combination apparatus capable of data communication between host devices and a method thereof. More particularly, the present invention relates to a combination apparatus capable of data communication between host devices, which performs a data communication between two host devices employed therein using an advanced technology attachment (ATA) packet interface, and a method thereof.

In order to satisfy consumers' various demands, combination apparatuses, which integrate various functions into a single apparatus, are increasingly being developed. The combination apparatuses include a mobile phone having a digital camera function, a digital camera having a digital camcorder function, and a set-top box having a DVD function. With the development of technology, the variety of combination apparatuses increases.

The combination apparatus comprises function blocks to perform various functions and host devices to control the respective function blocks. For example, the combination apparatus comprises a first host device to perform a first function and a second host device to perform a second function. The first host device and the second host device systemically control functions of the combination apparatus through mutual data communications.

The combination apparatus in the related art has to comprise a third host device to perform the data communication between the first and the second host devices.

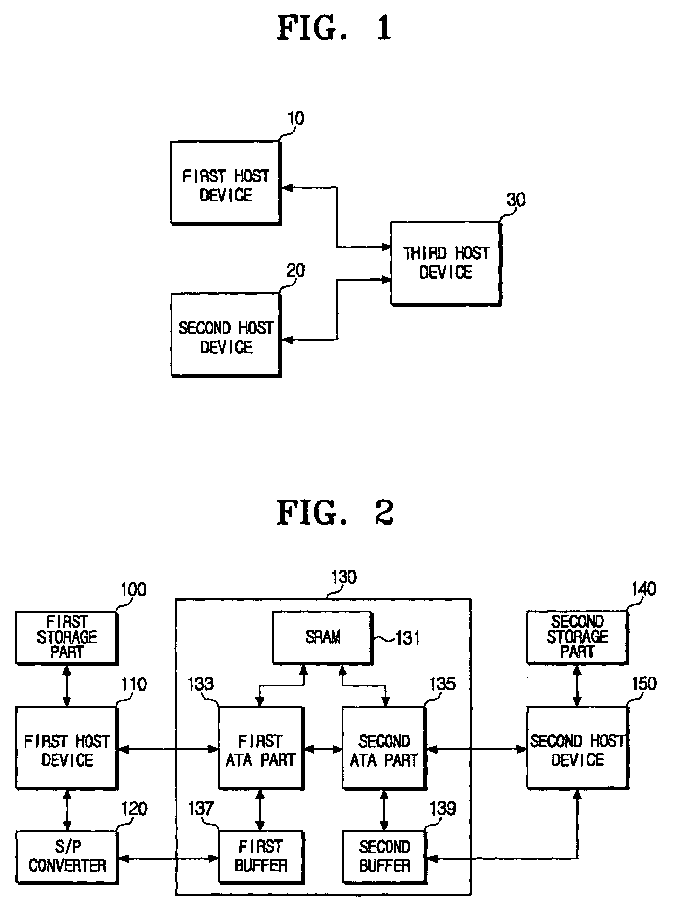

FIG. 1 is a block diagram illustrating a conventional combination apparatus.

Referring to FIG. 1, the conventional combination apparatus comprises a first host device 10, a second host device 20, and a third host device 30.

The first host device 10 and the second host device 20 control function blocks (not shown) to perform their respective functions.

The third host device 30 controls the first and the second host devices 10, 20 to perform a data communication therebetween. The third host device 30 controls the first and the second host devices 10, 20 through a peripheral component interconnect (PCI) or Ethernet.

For example, a set-top box, which has a DVD function, comprises a DVD decoder to perform the DVD function and a moving picture experts group (MPEG)-2 decoder to receive and process a digital broadcast signal. The set-top box comprises a main host device to control the DVD decoder and the MPEG-2decoder to transmit and receive data such as joint photographic expert group (JPEG) and MP 3 therebetween.

Due to the additional employment of the main host device, however, the combination apparatus has a complicated system structure and increases power consumption. Also, since the combination apparatus is subjected to a load when performing a certain function, it causes user inconvenience. Furthermore, the main host device requires a large number of components, which causes a cost of the combination apparatus to be increased.

Accordingly, there is a need for an improved apparatus and method for communicating data between host devices.

US 20051033880 relates to an USB-based host-to-host networking method capable of transmitting streams of data between PCs or notebooks via USBs, and more particularly, between two or more hosts capable of issuing control commands to control the transmission.

US 2003/0005 185 discloses a bridge between a CPU and peripheral devices using an external memory for data storage.

US 5,309,567 discloses a bus interface unit that interfaces a master processor and a slave processor. The usage of write request signals, read request signals, output enable signals, and busy signals is described.

It is the object of the present invention to enable efficient data communication between two host devices within one combination apparatus.

The object is solved by the subject matter of the independent claims.

Preferred embodiments of the present invention are defined by the dependent claims.

An exemplary aspect of the present invention is to address at least the above problems and/or disadvantages and to provide at least the advantages described below. Accordingly, exemplary embodiments of the present invention provide a combination apparatus capable of data communication between host devices, which performs a data communication between host devices using an advanced technology attachment (ATA) packet interface without requiring an additional host device, and a data communication method thereof.

The above exemplary aspect is achieved by providing a combination apparatus comprising a first host device that controls a first function block to perform a first function, a second host device that controls a second function block to perform a second function, and an advanced technology attachment (ATA) adjuster that performs a data communication between the first host device and the second host device through an ATA packet interface.

In an exemplary embodiment, the ATA adjuster comprises a first ATA part that receives at least one of a read command and a write command from the first host device, a second ATA part that receives the at least one command from the first ATA part and transmits the received command to the second host device, a first buffer that temporarily stores data transmitted from at least one of the first host device and the first ATA part according to the at least one command, a second buffer that temporarily stores data transmitted from at least one of the second host device and the second ATA part according to the at least one command, and an SRAM that stores data transmitted from at least one of the first ATA part and the second ATA part.

In an exemplary embodiment, the first ATA part stores the data temporarily stored in the first buffer to the SRAM and then transmits to the second ATA a storage completion signal indicating that the data has been stored to the SRAM, and the second ATA part transmits the data stored in the SRAM to the second buffer when receiving the storage completion signal.

In an exemplary embodiment, when the first host device transmits data to the second host device, the first host device temporarily stores the data in the first buffer and the second host device reads out the data temporarily stored in the second buffer.

In an exemplary embodiment, the ATA adjuster transmits and receives the data through a parallel ATA (PATA) packet interface.

In an exemplary embodiment, the combination apparatus further comprises a serial/parallel converter that, if the first host device performs a data communication through a serial ATA (SATA) packet interface, converts the SATA packet interface performed between the first host device and the ATA adjuster into a PATA packet interface and converts a PATA packet interface into a SATA packet interface.

The above exemplary aspect may also be achieved by providing a data communication method of a combination apparatus which performs a data communication between a first host device and a second host device through a PATA packet interface. The method comprises receiving at least one of a read command and a write command from the first host device, transmitting a busy signal to the first host device when receiving the read command, transmitting the read command to the second host device, and receiving data corresponding to the read command from the second host device and transmitting the data to the first host device through a PATA packet interface.

In an exemplary embodiment, if the first host device uses a SATA packet interface, the operation of transmitting the data to the first host device through the PATA packet interface converts the PATA packet interface into the SATA packet interface and then transmit the data.

In an exemplary embodiment, the method further comprises if the write command is received, receiving data corresponding to the write command from the first host device, transmitting a busy signal to the first host device, transmitting the write command to the second host device, and transmitting the data to the second host device through a PATA packet interface.

In an exemplary embodiment, if the first host device uses a SATA packet interface, the operation of transmitting the data to the second host device through a PATA packet interface is performed after the SATA packet interface is converted into a PATA packet interface.

The above exemplary aspect may also be achieved by providing a set-top box having a DVD function, comprising a HDD that stores joint photographic experts group (JPEG) and digital internet video express (DIVXDIVX) format video data and moving picture experts group layer 3 (MP3) format audio data, an MPEG-2 decoder that reads out at least one data of the JPEG and DIVXDIVX format video data and the MP3 format audio data from the HDD, an S/P converter that converts the data read by the MPEG-2 decoder through a SATA packet interface into data that is compatible through the PATA packet interface, an ATA adjuster that performs a data communication with respect to the data through the PATA packet interface, and a DVD decoder that receives the data through the ATA adjuster.

In an exemplary embodiment, the DVD decoder converts the data into international radio consultative committee (CCIR) 656 format video data and inter-IC sound (I2S) format audio data, and transmit the converted data to the MPEG-2 decoder.

In an exemplary embodiment, the MPEG-2 decoder receives the CCIR 656 format video data and the I2S format audio data and outputs the data as a video and an audio.

The above exemplary aspect may also be achieved by providing a content reproducing method comprising reading out at least one of JPEG and DIVXDIVX format video data and MP3 format audio data, performing a data communication with respect to the data through a PATA packet interface, converting the data into CCIR 656 format video data and I2S format audio data, and outputting the CCIR 656 format video data and the I2S format audio data as a video and an audio.

The method may further comprise converting the data read through a SATA packet interface into data that is compatible through a PATA packet interface.

Other objects, advantages, and salient features of the invention will become apparent to those skilled in the art from the following detailed description, which taken in conjunction with the annexed drawings, discloses exemplary embodiments of the invention.

### BRIEF DESCRIPTION OF THE DRAWINGS

The above and other objects, features, and advantages of a certain exemplary embodiment of the present invention will be more apparent from the following description taken in conjunction with the accompanying drawings, in which:

FIG. 1 is a block diagram illustrating a conventional combination apparatus;

FIG. 2 is a block diagram illustrating a combination apparatus according to an exemplary embodiment of the present invention;

FIGS. 3A to 3B are views illustrating data communications performed between host devices of the combination apparatus according to an exemplary embodiment of the present invention;

FIG. 4 is a block diagram illustrating a set-top box having a DVD function, which is one example of the combination apparatus according to an exemplary embodiment of the present invention; and

FIG. 5 is a flowchart illustrating a reproducing operation of the set-top box having a DVD function according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiment described herein can be made without departing from the scope and spirit of the invention. Also, descriptions of well-known functions and constructions are omitted for clarity and conciseness.

FIG. 2 is a block diagram illustrating a combination apparatus according to an exemplary embodiment of the present invention.

Referring to FIG. 2, the combination apparatus comprises a first storage part 100, a first host device 110, a serial/parallel converter 120, an advanced technology attachment (ATA) adjuster 130, a second storage part 140, and a second host device 150.

The first and the second storage parts 100, 140 store data of a certain format. For example, the first and the second storage parts 100, 140 store joint photographs experts group (JPEG) image data, digital internet video express (DIVX) format video data and moving picture experts group layer 3 (MP3) format audio data.

The first host device 110 controls a first function block (not shown) to perform a first function and transmits the data stored in the first storage part 100 to the ATA adjuster 130 through the S/P converter 120. The first host device 110 receives data from the ATA adjuster 130 through the S/P converter 120 and stores the received data in the first storage part 100.

The S/P converter 120 converts a serial ATA (SATA) packet interface into a parallel ATA (PATA) packet interface or performs a reverse converting operation. For example, if the first host device 110 performs a data communication through the SATA packet interface, the S/P converter 120 enables interface compatibility between the first host device 110 and the ATA adjuster 130 which performs a data communication through the PATA packet interface.

More specifically, the S/P converter 120 receives data from the first host device 110 through the SATA packet interface and transmits the data to the ATA adjuster 130 through the PATA packet interface. In the reverse way, the S/P converter 120 receives data from the ATA adjuster 130 through the PATA packet interface method, converts the data into data compatible through the SATA packet interface, and transmits the data to the first host device 110. If the host device 110 performs a data communication through the PATA packet interface, the S/P converter 120 may not be included in the combination apparatus of the present invention.

The ATA adjuster 130 performs data communications with respect to the first and the second host devices 110, 150 through the PATA packet interface, and comprises an SRAM 131, a first ATA part 133, a second ATA part 135, a first buffer 137, and a second buffer 139.

The first ATA part 133 communicates with the first host device 110 according to a general purpose input/output (GPIO) method to receive and transmit a read command and a write command. The first ATA part 133 transmits the read command and the write command received from the first host device 110 to the second ATA part 135, or transmits a read command and a write command transmitted from the second ATA part 135 to the first host device 110. The first ATA part 133 stores data temporarily stored in the first buffer 137 to the SRAM 131, or stores data stored in the SRAM 131 to the first buffer 137 at the request of the second ATA part 135.

The second ATA part 135 communicates with the second host device 150 according to the GPIO method to receive and transmit a read command and a write command. Also, the second ATA part 135 transmits the read command and the write command received from the second host device 150 to the first ATA part 133, or transmits the read command and the write command transmitted from the first ATA part 133 to the second host device 150. The second ATA part 135 stores data temporarily stored in the second buffer 139 to the SRAM 131, or stores data stored in the SRAM 131 to the second buffer 139 at the request of the first ATA part 133.

The first buffer 137 temporarily stores data transmitted from the first host device 110, or temporarily stores data stored in the SRAM 131.

The second buffer 139 temporarily stores data transmitted from the second host device 150, or temporarily stores data stored in the SRAM 131.

The SRAM 131 stores the data temporarily stored in the first buffer 137 under the control of the first ATA part 133, or stores the data temporarily stored in the second buffer 139 under the control of the second ATA part 135.

The second host device 150 controls a second function block (not shown) to perform a second function, and transmits the data stored in the second storage part 140 to the ATA adjuster 130. The second host device 150 reads out data from the second buffer 139 and stores the data in the second storage part 140.

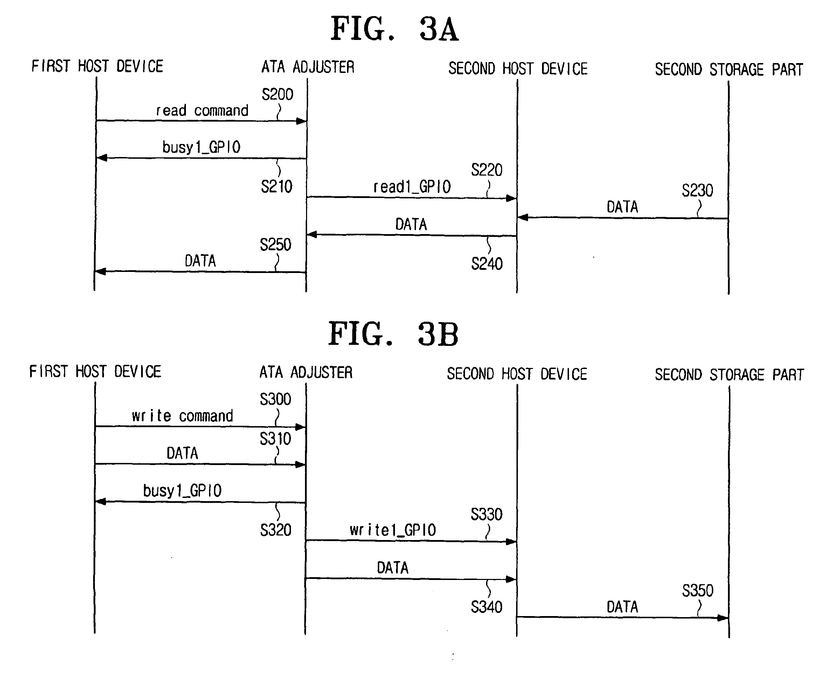

FIGS. 3A and 3B are views illustrating data communications performed by the host devices of the combination apparatus according to an exemplary embodiment of the present invention.

FIG. 3A is a view illustrating a method in which the first host device 110 reads out data from the second storage part 140.

Referring to FIG. 3A, the first host device 110 transmits a read command to the ATA adjuster 130 at operation S200. The read command includes a sector counter indicating the number of data to read and an address indicating a location where the data is stored.

The ATA adjuster 130 transmits a GPIO busy signal 'busy1_GPIO' to the first host device 110 not to receive another command from the first host device 110 while processing the read command at operation S210. More specifically, the first ATA part 133 transmits the read command to the second ATA part 135, and simultaneously transmits the GPIO busy signal 'busy1_GPIO' to the first host device 110.

The second ATA part 135 converts the received read command into a GPIO read command 'read1_GPIO', and transmits the GPIO read command 'read1_GPIO' to the second host device 150 at operation S220.

On receipt of the read GPIO command 'read1_GPIO' from the second ATA part 135, the second host device 150 refers to the address and reads out data from the second storage part 140 as much as the sector count at operation S230.

The second host device 150 transmits the read data to the ATA adjuster 130, and the data is temporarily stored in the second buffer 139 at operation S240.

The second ATA part 135 stores the data temporarily stored in the second buffer 139 to the SRAM 131 and then transmits to the first ATA part 133 a storage completion signal indicating that the data has been stored in the SRAM 131. The first ATA part 133 temporarily stores the data stored in the SRAM 131 to the first buffer 137 and clears the busy signal 'busy1_GPIO' of the first host device 110.

The first host device 110 reads out the data stored in the first buffer 137 when the busy signal 'busy1_GPIO' is cleared at operation S250. Herein, if the first host device 110 performs a data communication through the SATA packet interface, the S/P converter 120 receives the data from the first buffer 137 through the PATA packet interface, converts the data into data compatible through the SATA packet interface, and transmits the data to the first host device 110.

FIG. 3B is a view illustrating a method in which the first host device 110 writes data to the second storage part 140.

Referring to FIG. 3B, the first host device 110 transmits a write command to the ATA adjuster 130 at operation S300. The write command includes a sector count indicating the number of data to write to the second storage part 140 and an address indicating a location where the data is stored.

The first host device 110 transmits data to the ATA adjuster 130 at operation S310. Herein, if the first host device 110 performs a data communication through the SATA packet interface, the S/P converter 120 receives the data from the first host device through the SATA packet interface, converts the data into data which is compatible through the PATA packet interface, and transmits the data to the ATA adjuster 130. The transmitted data is temporarily stored in the first buffer 137.

The first ATA part 133 transmits the write command received from the first host device 110 to the second ATA part 135, and transmits a GPIO busy signal 'busy1_GPIO' to the first host device 110 at operation S320.

The first ATA part 133 stores the data stored in the first buffer 137 to the SRAM 131 and then transmits to the second ATA part 135 a storage completion signal indicating that the data has been stored in the SRAM 131. Then, the second ATA part 135 temporarily stores the data stored in the SRAM 131 to the second buffer 139, and transmits a GPIO write command 'write1_GPIO' to the second host device 150 at operation S330.

On the receipt of the GPIO write command 'write1_GPIO', the second host device 150 reads out the data stored in the second buffer 139 at operation S340 and writes the data to the second storage part 140 at operation S350. When the data stored in the second buffer 139 is completely transmitted to the second host device 150, the first ATA part 133 clears the GPIO busy signal 'busy1_GPIO'.

Through the above-described process, the first and the second host devices 110, 150 perform mutual data communications, and in the same method as the above-described method, the second host device 150 reads out data from the first storage part 100 or writes data to the first storage part 100.

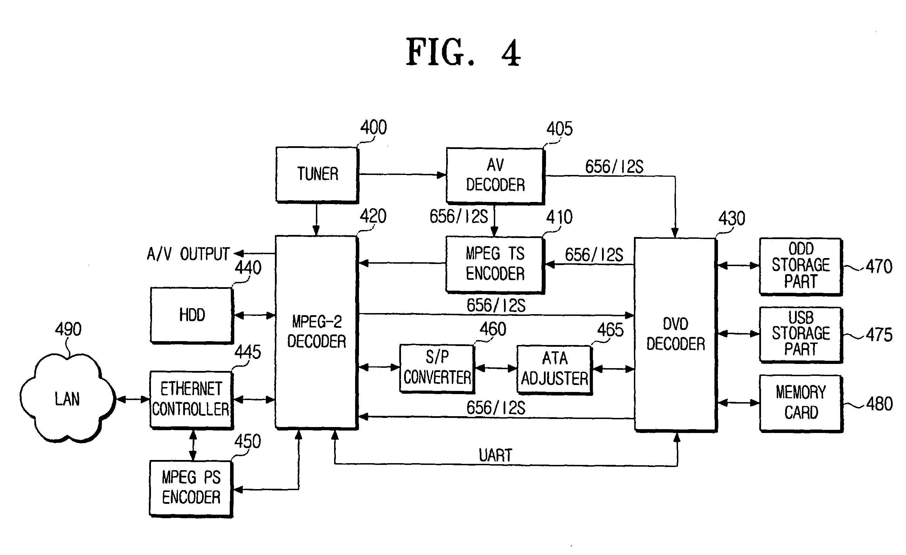

FIG. 4 is a block diagram illustrating a set-top box having a DVD function, which is one example of the combination apparatus according to an exemplary embodiment of the present invention.

Referring to FIG. 4, the set-top box having a DVD function, comprises a tuner 400, an AV decoder 405, an MPEG TS encoder 410, an MPEG-2decoder 420, a DVD decoder 430, a HDD 440, an Ethernet controller 445, an MPEG PS encoder 450, an S/P converter 460, an ATA adjuster 465, an ODD storage part 470, a USB storage part 475, and a memory card 480.

The tuner 400 comprises a first tuner (not shown) to convert a radio frequency (RF) signal received through an antenna (not shown) into a transport stream (TS) signal and a second tuner (not shown) to convert the received RF signal into a program stream (PS) signal.

The AV decoder 405 receives the PS signal output from the tuner 400, decodes a video signal included in the PS signal, and outputs an international radio consultative committee (CCIR) 656 format video signal. Also, the AV decoder 405 decodes an audio signal included in the PS signal and outputs an inter-IC sound (I2S) format audio signal.

The MPEG TS encoder 410 converts the CCIR 656 format video signal and the I2S format audio signal (these signals are referred to as 656/I2S signal hereinafter) into a TS signal, and transmits the TS signal to the MPEG-2 decoder 420.

The MPEG-2 decoder 420 processes the TS signal output from the tuner 400 and the TS signal output from the MPEG TS encoder 410 and outputs them as audio/video (A/V) or stores the A/V in the HDD 440. Also, the MPEG-2 decoder converts the TS signal into the 656/I2S signal and transmits it to the DVD decoder 430, and processes the 656/I2S signal and outputs the A/V.

The HDD 440 stores the TS signal and also JPEG and DIVXDIVX format video data and MP3 format audio data.

The DVD decoder 430 stores the 656/I2S signals received from the AV decoder 405 and the MPEG-2 decoder 420 to the ODD storage part 470, the USB storage part 475, and the memory card 480. The DVD decoder 430 converts the JPEG and DIVXDIVX format video data and the MP3 format audio data stored in the ODD storage part 470, the USB storage part 475, and the memory card 480 into the 656/I2S signal, and transmits the 656/I2S signal to the MEPG-2 decoder 420. Herein, the DVD decoder 430 and the MPEG-2 decoder 420 transmit and receive data in a universal asynchronous receiver/transmitter (UART) method.

When the MPEG-2 decoder 420, which performs a data communication through the SATA packet interface, transmits the JPEG and DIVXDIVX format video data and the MP3 format audio data stored in the HDD 440 to the S/P converter, the S/P converter 460 converts the data into data which are compatible through the PATA packet interface and transmits the converted data to the ATA adjuster 465.

Also, the S/P converter 460 converts the JPEG and DIVXDIVX format video data and the MP3 audio data, which are transmitted through the PATA packet interface, into data which are compatible through the SATA packet interface, and transmits the converted data to the MPEG-2 decoder 420.

The ATA adjuster 465 performs data communications with respect to the MPEG-2 decoder 420 and the DVD decoder 430 through the PATA packet interface. That is, the ATA adjuster 465 receives the JPEG and DIVXDIVX format video data and the MP3 audio data from the S/P converter 460 and transmits the received data to the DVD decoder 430. In the reverse way, the ATA adjuster 465 receives the JPEG and DIVXDIVX format video data and the MP3 audio data from the DVD decoder 430 and transmits the received data to the S/P converter 460.

The Ethernet controller 445 controls the TS signal output from the MPEG-2 decoder 420 to be transmitted to a personal computer (PC) through a local area network (LAN) 490. Also, the Ethernet controller 445 controls the PS signal output from the MPEG PS encoder 450 to be transmitted to the PC through the LAN 490.

The MPEG PS encoder 450 converts the TS signal output from the MPEG-2 decoder 420 into a PS signal and transmits the converted signal to the Ethernet controller 445.

The structure of the set-top box having a DVD function was described in the above. Hereinbelow, operations of the set-top box, such as live broadcasting, broadcast signal recording, playback of recorded content, time-shift, recording and reproducing, dubbing and recording, dubbing and reproducing, network integration broadcast signal reproducing, and network integration content reproducing, will now be described in detail.

Referring to FIG. 4, an exemplary broadcast signal reproducing operation of the set-top box having a DVD function will now be described.

If a broadcast signal is a high definition (HD) broadcast signal, the tuner 400 converts a RF signal received through an antenna into a TS signal and transmits the TS signal to the MPEG-2 decoder 420. The MPEG-2 decoder 420 processes the TS signal and outputs it as an A/V.

If a broadcast signal is a standard definition broadcast signal, the tuner 400 converts an RF signal received through an antenna into a PS signal and transmits the PS signal to the AV decoder 405. The AV decoder 405 converts the PS signal into a 656/I2S signal and outputs the 656/I2S signal. The 656/I2S signal is converted into a TS signal by the MPEG TS encoder 410 and transmitted to the MPEG-2 decoder 420. The MPEG-2 decoder 420 processes the TS signal and outputs it as an A/V.

Referring to FIG. 4, an exemplary broadcast signal recording operation of the set-top box having a DVD function will now be described.

The MPEG-2 decoder 420 stores a TS signal received from the tuner 400 to the HDD 440 to store an HD broadcast signal or stores a TS signal received from the MPEG-TS encoder 410 to the HDD 440 to store an SD broadcast signal.

Also, when the MPEG-2 decoder 420 converts the TS signal into a 656/I2S signal and transmits the 656/I2S signal to the DVD decoder 430, the DVD decoder 430 receives the 656/I2S signal and stores the HD broadcast signal or the SD broadcast signal to the ODD storage part 470, the USB storage part 475 and/or the memory card 480.

Referring to FIG. 4, an exemplary recorded content reproducing operation of the set-top box having a DVD function will now be described.

A TS signal stored in the HDD 440 is processed at the MPEG-2 decoder 420 and is output as an A/V.

Next, an exemplary operation of reproducing the JPEG and DIVXDIVX format video data and the MP3 format audio data stored in the HDD 440 will now be described.

The MPEG-2 decoder 420 reads out data from the HDD 440 and transmits the data to the SIP converter 460 through the SATA packet interface. The S/P converter 460 converts the SATA packet interface into the PATA packet interface and transmits the data to the ATA adjuster 130. The ATA adjuster 130 transmits the data to the DVD decoder 430.

The DVD decoder 430 converts the JPEG and DIVX format video data and the MP3 format audio data into 656/I2S signals and transmits the 656/I2S signals to the MPEG-2 decoder 420. The MPEG-2 decoder 420 processes the 656/I2S signals and outputs them as A/V.

If the JPEG and DIVX format video data and the MP3 format audio data are stored in the ODD storage part 470, the USB storage part 475, and/or the memory card 480, the DVD decoder 430 converts the data into the 656/I2S signals and transmits the 656/I2S signals to the MPEG-2 decoder 420. The transmitted 656/I2S signals are processed in the MPEG-2 decoder 420 and output as A/V.

Referring to FIG. 4, an exemplary time-shift operation of the set-top box having a DVD function will now be described.

If an HD broadcast signal is received, the MPEG-2 decoder 420 processes a TS signal stored in the HDD 440 and outputs it as an A/V, and simultaneously, stores a TS signal received from the tuner 400 to the HDD 440.

If an SD broadcast signal is received, the MPEG-2 decoder 420 processes a TS signal stored in the HDD 440 and outputs it as an A/V. Meanwhile, when the AV decoder 405 decodes a PS signal output from the tuner 400 and the MPEG TS encoder 410 outputs a TS signal, the MPEG-2 decoder 420 receives the TS signal from the MPEG TS encoder 410 and stores the TS signal to the HDD 440.

Referring to FIG. 4, an exemplary recording and reproducing operation of the set-top box having a DVD function will now be described.

If an HD broadcast signal is to be recorded and reproduced, the MPEG-2 decoder 420 stores a TS signal received through the tuner 400 to the HDD 440, and simultaneously, processes another TS signal stored in the HDD 440 and outputs it as an A/V.

If an SD broadcast signal is to be recorded and reproduced, the MPEG-2 decoder 420 reads out a TS signal from the HDD 440, process the TS signal and outputs it as an A/V. When an RF signal received through the tuner 400 is converted into a PS signal and input into the AV decoder 405, the AV decoder 405 converts the PS signal into a 656/I2S signal and outputs the 656/I2S signal. Then, the DVD decoder 430 stores the 656/I2S signal output from the AV decoder 405 to the ODD storage part 470, the USB storage part 475, and/or the memory card 480.

Referring to FIG. 4, an exemplary dubbing and recording operation of the set-top box having a DVD function will now be described.

If a broadcast signal is to be recorded to the HDD 440, the MPEG-2 decoder 420 converts a TS signal stored in the HDD 440 into a 656 signal and transmits the 656 signal to the DVD decoder 430. The DVD decoder 430 receives the 656 signal and stores it to the ODD storage part 470, the USB storage part 475, and/or the memory card 480. Meanwhile, the MPEG-2 decoder 420 records the TS signal received from the tuner 400 to the HDD 440.

In order to store a broadcast signal to the ODD storage part 470, the USB storage part 475, and/or the memory card 480, the MPEG-2 decoder 420 converts a TS signal stored in the HDD 440 into a 656 signal and transmits the 656 signal to the DVD decoder 430. The DVD decoder 430 receives the 656 signal and stores it to the ODD storage part 470, the USB storage part 475, and/or the memory card 480. Meanwhile, the MPEG-2 decoder 420 records the TS signal received from the MPEG TS encoder 410 to the HDD 440.

Referring to FIG. 4, an exemplary dubbing and reproducing operation of the set-top box having a DVD function will now be described.

The MEPG-2 decoder 420 converts a TS signal stored in the HDD 440 into a 656 signal and transmits the 656 signal to the DVD decoder 430. The DVD decoder 430 records the 656 signal to the ODD storage part 470, the USB storage part 475, and/or the memory card 480. Meanwhile, the MPEG-2 decoder 420 processes the TS signal stored in the HDD 440 and outputs it as an A/V.

Referring to FIG. 4, an exemplary network integration broadcast signal reproducing operation of the set-top box having a DVD function will now be described.

If a target signal is an HD broadcast signal, the MPEG-2 decoder 420 transmits a TS signal to the Ethernet controller 445 and the Ethernet controller 445 transmits the TS signal to the PC through the LAN 490.

If a target signal is an SD signal, the MPEG-2 decoder 420 transmits a TS signal received from the MPEG TS encoder 410 to the MPEG PS encoder 450. The MPEG PS encoder 450 converts the TS signal into a PS signal and transmits the PS signal to the Ethernet controller 445. The Ethernet controller 445 transmits the PS signal to the PC through the LAN 490.

Referring to FIG. 4, a network integration content reproducing operation of the set-top box having a DVD function will now be described.

If a content is stored in the HDD 440, the MPEG-2 decoder 420 transmits a TS signal stored in the HDD 440 to the Ethernet controller 445. The Ethernet controller 445 transmits the TS signal to the PC through the LAN 490. Alternatively, when the MPEG-2 decoder 420 transmits the TS signal stored in the HDD 440 to the MPEG PS encoder 450, the MPEG PS encoder 450 converts the TS signal into a PS signal and transmits the PS signal to the Ethernet controller 445. The Ethernet controller 445 transmits the PS signal to the PC through the LAN 490.

If a content is stored in the ODD storage part 470, the USB storage part 475 and/or the memory card 480, the DVD decoder 430 converts JPEG and DIVX format video data and MP3 format audio data stored in the ODD storage part 470, the USB storage part 475, and/or the memory card 480 into 656/I2S signals and transmits the 656/I2S signals to the MPEG-2 decoder 420. The MPEG-2 decoder 420 transmits the 656/I2S signals to the Ethernet controller 445 and the Ethernet controller 445 transmits the 656/I2S signals to the PC through the LAN 490.

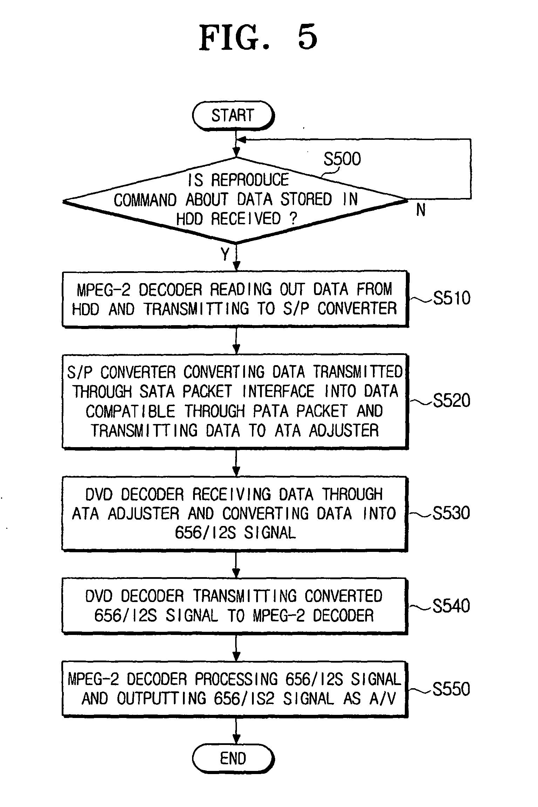

FIG. 5 is a flowchart illustrating a reproducing operation of the set-top box having a DVD function according to an exemplary embodiment of the present invention.

Referring to FIG. 5, when a reproduce command about the data stored in the HDD 440 is received at operation S500, the MPEG-2 decoder 420 reads out the data from the HDD 440 and transmits the data to the S/P converter 460 at operation S510. The data may be JPEG and DIVX format video data and MP3 format audio data stored in the HDD 440 and are transmitted without changing their own formats.

The S/P converter 460 converts the data, which are transmitted through the SATA packet interface, into data that are compatible through the PATA packet interface, and transmits the converted data to the ATA adjuster 465 at operation S520.

The DVD decoder 430 receives the data through the ATA adjuster 130 and converts the data into 656/I2S signals at operation S530.

When the DVD decoder 430 transmits the 656/I2S signals to the MPEG-2 decoder 420 at operation S540, the MPEG-2 decoder 420 processes the 656/I2S signals and outputs them as A/V at operation S550.

Through the above-described process, the JPEG and DIVX format video data and the MP3 format audio data are transmitted and received between the MPEG-2 decoder 420 and the DVD decoder 430 and are reproduced without changing their own formats.

According to exemplary embodiments of the present invention as described above, since the data communication is performed through the ATA packet interface without changing the formats of data, a third host device is not required. Therefore, a more effective system can be established and power consumption and a cost of the product can be reduced.

While the invention has been shown and described with reference to certain exemplary embodiments thereof, it will be understood by those skilled in the art that various changes in the form and details may be made therein without departing from the scope of the invention as defined by the appended claims and the full scope of equivalents thereof.

## Claims

1. A data communication method for a combination apparatus comprising a first host device, a second host device and a host device interface adjuster, the host device interface adjuster comprising a first host device interface part, a second host device interface part, a first buffer, a second buffer and a memory device, the method comprising:
receiving (S200), by the first host device interface part of the host device interface adjuster, a read command from the first host device;
receiving, by the second host device interface part of the host device interface adjuster, the read command from the first host device interface part;
receiving (S220), by the second host, the read command from the second host device interface part;
receiving (S240), by the host device interface adjuster, data corresponding to the read command from the second host and temporarily storing the data in the second buffer,
storing, by the second host device interface part, the data temporarily stored in the second buffer to the memory device and transmitting to the first host device interface part a storage completion signal indicating that the data has been stored to the memory device;
temporarily storing, by the first host device interface part, the data stored in the memory device to the first buffer, and
reading (S250), by the first host device, the data from the first buffer.

2. The method as claimed in claim 1, wherein the first host device interface part transmits (S210) a busy signal to the first host device upon receiving the read command from the first host device, and clears the busy signal of the first host device upon temporarily storing the data to the first buffer.

3. A data communication method for a combination apparatus comprising a first host device, a second host device and a host device interface adjuster, the host device interface adjuster comprising a first host device interface part, a second host device interface part, a first buffer, a second buffer and a memory device, the method comprising:
receiving (S300), by the first host device interface part of the host device interface adjuster, a write command from the first host device;
receiving (S310), by the host device interface adjuster, data corresponding to the write command from the first host device and temporarily storing the data in the first buffer,
transmitting, by the first host device interface part, the write command to the second host device interface part of the host device interface adjuster, storing the data temporarily stored in the first buffer to the memory device and transmitting to the second host interface device part a storage completion signal indicating that the data has been stored to the memory device;
temporarily storing, by the second host device interface part, the data stored in the memory device to the second buffer and transmitting (S330) the write command to the second host device; and
reading (S340), by the second host device, the data from the second buffer.

4. The method as claimed in claim 3, further comprising storing (S350), by the second host device, the data read from the second buffer to a second storage part.

5. The method as claimed in claim 3 or 4, wherein the first host device interface part transmits (S320) a busy signal to the first host device upon receiving the write command from the first host device and clears the busy signal when the data stored in the second buffer is completely transmitted to the second host device.

6. The method as claimed in one of claims 1 to 4, wherein the host device interface adjuster transmits and receives data as parallel data.

7. The method as claimed in claim 6, further comprising, if the first host device transmits and receives data as serial data, converting serial data transmitted from the first host device to the host device interface adjuster into parallel data and converting parallel data transmitted from the host device interface adjuster to the first host device into serial data.

8. A combination apparatus comprising:
a first host device (110) for controlling a first function block to perform a first function and transmitting data to and from a first storage part (100);
a second host device (150) for controlling a second function block to perform a second function and transmitting data to and from a second storage part (140); and
a host device interface adjuster (130) for performing a data communication between the first host device (110) and the second host device (150), wherein the host device interface adjuster (130) comprises:
a first host device interface part (133) for communicating with the first host device (110) and a second host device interface part (135), reading data from a first buffer (137) and a memory device (131) and storing data to the first buffer (137) and the memory device (131);
the second host device interface part (135) for communicating with the second host device and the first host device interface part, reading data from a second buffer (139) and the memory device (131) and storing data to the second buffer (139) and the memory device (131);
the first buffer (137) for temporarily storing data;
the second buffer (139) for temporarily storing; and
the memory device (131) for storing;
wherein the combination apparatus is configured to perform the method of one of claims 1 to 7.

9. The combination apparatus as claimed in claim 8, wherein the host device interface adjuster (130) is configured to transmit and receive data through a parallel data interface.

10. The combination apparatus as claimed in claim 9, further comprising a converter (120) for, if the first host device (110) is configured to transmit and receive data as serial data , converting serial data transmitted from the first host device (110)to the host device interface adjuster(130) into parallel data and converting parallel data transmitted from the host device interface adjuster (130) to the first host device (110) into serial data.

11. The combination apparatus as claimed in claim 10, wherein the combination apparatus is a set-top box having a multi-media function
the first storage part (100) comprises a memory (440) for storing at least one of video data and audio data, the first host device (110) comprises a first decoder (420) for reading out at least one data of the video data and the audio data from the memory (440), and the second host device (150) comprises
a second decoder (430) for receiving the data through the host device interface adjuster (130; 465).

12. The combination apparatus as claimed in claim 11, wherein the second decoder (430) is configured to convert the data into formatted video data and formatted audio data, and transmit the converted data to the first decoder (420).

13. The combination apparatus as claimed in claim 12, wherein the first decoder (420) is configured to receive the formatted video data and the formatted audio data and output the data as a video and an audio.

14. The combination apparatus as claimed in claim 10, wherein the host device interface adjuster (130) comprises an advanced technology attachment, ATA, adjuster that performs the data communication through an ATA packet interface.

15. The combination apparatus as claimed in claim 14, wherein the first host device interface part (133) comprises a first ATA part, the second host device interface part (135) comprises a second ATA part and the memory device (131) is an SRAM.

16. The combination apparatus as claimed in one of claims 11 to 13, wherein the multi-media function comprises a DVD function, the first decoder (420) comprises a compressed data decoder, the video data comprises compressed digital video data, the audio data comprises compressed digital audio data, the converter (460) comprises a data format converter, and the second decoder (430) comprises a multi-media decoder.

17. The combination apparatus as claimed in claim 12 wherein the memory device (440) comprises an HDD, the compressed data decoder (420) comprises an MPEG-2 decoder, the compressed digital video data comprises at least one of JPEG and DIVX format video data, the compressed digital audio data comprises MP3 format audio data, the data format converter comprises a serial-to-parallel converter (460), the host device interface adjuster (465) comprises an advanced technology attachment adjuster and the multi-media decoder (430) comprises a DVD decoder.

18. The combination apparatus as claimed in claim 17, wherein the formatted video data comprises international radio consultative committee 656 format video data and the formatted audio data comprises inter-IC sound format audio data.

## Patentansprüche

1. Datenkommunikationsverfahren für eine Kombinationsvorrichtung, die eine erste Host-Einrichtung, eine zweite Host-Einrichtung und eine Einrichtung zum Anpassen von Schnittstellen von Host-Einrichtungen umfasst, wobei die Einrichtung zum Anpassen von Schnittstellen von Host-Einrichtungen einen ersten Host-Einrichtungs-Schnittstellenteil, einen zweiten Host-Einrichtungs-Schnittstellenteil, einen ersten Puffer, einen zweiten Puffer und eine Speichereinrichtung umfasst, und wobei das Verfahren umfasst:
Empfangen (S200) eines Lesebefehls von der ersten Host-Einrichtung durch den ersten Host-Einrichtungs-Schnittstellenteil der Einrichtung zum Anpassen von Schnittstellen von Host-Einrichtungen;
Empfangen des Lesebefehls von dem ersten Host-Einrichtungs-Schnittstellenteil durch den zweiten Host-Einrichtungs-Schnittstellenteil der Einrichtung zum Anpassen von Schnittstellen von Host-Einrichtungen;
Empfangen des Lesebefehls von dem zweiten Host-Einrichtungs-Schnittstellenteil durch den zweiten Host;
Empfangen (S240) von Daten, die dem Lesebefehl entsprechen, von dem zweiten Host durch die Einrichtung zum Anpassen von Schnittstellen von Host-Einrichtungen und temporäres Speichern der Daten in dem zweiten Puffer;
Speichern der temporär in dem zweiten Puffer gespeicherten Daten in der Speichereinrichtung durch den zweiten Host-Einrichtungs-Schnittstellenteil und Senden eines Speicherungs-Abschlusssignals, das anzeigt, dass die Daten in der Speichereinrichtung gespeichert worden sind, zu dem ersten Host-Einrichtungs-Schnittstellenteil;
temporäres Speichern der in der Speichereinrichtung gespeicherten Daten in dem ersten Puffer durch den ersten Host-Einrichtungs-Schnittstellenteil; und
Lesen (S250) der Daten aus dem ersten Puffer durch die erste Host-Einrichtung.

2. Verfahren nach Anspruch 1, wobei der erste Host-Einrichtungs-Schnittstellenteil beim Empfangen des Lesebefehls von der ersten Host-Einrichtung ein Besetzt-Signal zu der ersten Host-Einrichtung sendet und nach temporärem Speichern der Daten in dem ersten Puffer das Besetzt-Signal der ersten Host-Einrichtung löscht.

3. Datenkommunikationsverfahren für eine Kombinationsvorrichtung, die eine erste Host-Einrichtung, eine zweite Host-Einrichtung und eine Einrichtung zum Anpassen von Schnittstellen von Host-Einrichtungen umfasst, wobei die Einrichtung zum Anpassen von Schnittstellen von Host-Einrichtungen einen ersten Host-Einrichtungs-Schnittstellenteil, einen zweiten Host-Einrichtungs-Schnittstellenteil, einen ersten Puffer, einen zweiten Puffer und eine Speichereinrichtung umfasst, wobei das Verfahren umfasst:
Empfangen (S300) eines Schreibbefehls von der ersten Host-Einrichtung durch den ersten Host-Einrichtungs-Schnittstellenteil der Einrichtung zum Anpassen von Schnittstellen von Host-Einrichtungen;
Empfangen (S310) von Daten, die dem Schreibbefehl entsprechen, von der ersten Host-Einrichtung durch die Einrichtung zum Anpassen von Schnittstellen von Host-Einrichtungen und temporäres Speichern der Daten in dem ersten Puffer;
Senden des Schreibbefehls zu dem zweiten Host-Einrichtungs-Schnittstellenteil der Einrichtung zum Anpassen von Schnittstellen von Host-Einrichtungen durch den ersten Host-Einrichtungs-Schnittstellenteil, Speichern der temporär in dem ersten Puffer gespeicherten Daten in der Speichereinrichtung und Senden eines Speicherungs-Abschlusssignals, das anzeigt, dass die Daten in der Speichereinrichtung gespeichert worden sind, zu dem zweiten Host-Einrichtungs-Schnittstellenteil;
temporäres Speichern der in der Speichereinrichtung gespeicherten Daten in dem zweiten Puffer durch den zweiten Host-Einrichtungs-Schnittstellenteil und Senden (S330) des Schreibbefehls zu der zweiten Host-Einrichtung; und
Lesen (S340) der Daten aus dem zweiten Puffer durch die zweite Host-Einrichtung.

4. Verfahren nach Anspruch 3, das des Weitern Speichern (S350) der aus dem zweiten Puffer gelesenen Daten in einem zweiten Speicherteil durch die zweite Host-Einrichtung umfasst.

5. Verfahren nach Anspruch 3 oder 4, wobei der erste Host-Einrichtungs-Schnittstellenteil beim Empfangen des Schreibbefehls von der ersten Host-Einrichtung ein Besetzt-Signal zu der ersten Host-Einrichtung sendet und nach temporärem Speichern der Daten in dem ersten Puffer das Besetzt-Signal der ersten Host-Einrichtung löscht.

6. Verfahren nach einem der Ansprüche 1 bis 4, wobei die Einrichtung zum Anpassen von Schnittstellen von Host-Einrichtungen Daten als parallele Daten sendet und empfängt.

7. Verfahren nach Anspruch 6, das des Weiteren, wenn die erste Host-Einrichtung Daten als serielle Daten sendet und empfängt, Umwandeln von der ersten Host-Einrichtung zu der Einrichtung zum Anpassen von Schnittstellen von Host-Einrichtungen gesendeter serieller Daten in parallele Daten sowie Umwandeln von der Einrichtung zum Anpassen von Schnittstellen von Host-Einrichtungen zu der ersten Host-Einrichtung gesendeter paralleler Daten in serielle Daten umfasst.

8. Kombinationsvorrichtung, die umfasst:
eine erste Host-Einrichtung (110), mit der ein erster Funktionsblock so gesteuert wird, dass er eine erste Funktion erfüllt und Daten zu und von einem ersten Speicherteil (100) sendet;
eine zweite Host-Einrichtung (150), mit der ein zweiter Funktionsblock so gesteuert wird, dass er eine zweite Funktion erfüllt und Daten zu und von einem zweiten Speicherteil (100) sendet; und
eine Einrichtung zum Anpassen von Schnittstellen von Host-Einrichtungen (130), mit der eine Datenkommunikation zwischen der ersten Host-Einrichtung (110) und der zweiten Host-Einrichtung (150) durchgeführt wird, wobei die Einrichtung zum Anpassen von Schnittstellen von Host-Einrichtungen (130) umfasst:
einen ersten Host-Einrichtungs-Schnittstellenteil (130) zum Kommunizieren mit der ersten Host-Einrichtung (110) und einem zweiten Host-Einrichtungs-Schnittstellenteil (135), zum Lesen von Daten aus einem ersten Puffer (137) und einer Speichereinrichtung (131) sowie zum Speichern von Daten in dem ersten Puffer (137) und der Speichereinrichtung (131);
einen zweiten Host-Einrichtungs-Schnittstellenteil (135) zum Kommunizieren mit der zweiten Host-Einrichtung und dem ersten Host-Einrichtungs-Schnittstellenteil, zum Lesen von Daten aus einem zweiten Puffer (139) und der Speichereinrichtung (131) sowie zum Speichern von Daten in dem zweiten Puffer (139) und der Speichereinrichtung (131);
den ersten Puffer (137) zum temporären Speichern von Daten;
den zweiten Puffer (139) zum temporären Speichern; und
die Speichereinrichtung (131) zum Speichern;
wobei die Kombinationsvorrichtung so konfiguriert ist, dass sie das Verfahren nach einem der Ansprüche 1 bis 7 durchführt.

9. Kombinationsvorrichtung nach Anspruch 8, wobei die Einrichtung zum Anpassen von Schnittstellen von Host-Einrichtungen (130) so konfiguriert ist, dass sie Daten über eine parallele Datenschnittstelle sendet und empfängt.

10. Kombinationsvorrichtung nach Anspruch 9, die des Weiteren einen Wandler (120) umfasst, der, wenn die erste Host-Einrichtung (110) so konfiguriert ist, dass sie Daten als serielle Daten sendet und empfängt, von der ersten Host-Einrichtung (110) zu der Einrichtung zum Anpassen von Schnittstellen von Host-Einrichtungen (130) gesendete serielle Daten in parallele Daten umwandelt und von der Einrichtung zum Anpassen von Schnittstellen von Host-Einrichtungen (130) zu der ersten Host-Einrichtung (110) gesendete parallele Daten in serielle Daten umwandelt.

11. Kombinationsvorrichtung nach Anspruch 10, wobei die Kombinationsvorrichtung eine Set-Top-Box mit einer Multimedia-Funktion ist,
der erste Speicherteil (100) einen Speicher (440) zum Speichern wenigstens von Videodaten oder Audiodaten umfasst, die erste Host-Einrichtung (110) einen ersten Decoder (420) zum Auslesen wenigstens der Videodaten oder der Audiodaten aus dem Speicher (440) umfasst und die zweite Host-Einrichtung (150) umfasst:
einen zweiten Decoder (430) zum Empfangen der Daten über die Einrichtung zum Anpassen von Schnittstellen von Host-Einrichtungen (130; 465).

12. Kombinationsvorrichtung nach Anspruch 11, wobei der zweite Decoder (430) so konfiguriert ist, dass er die Daten in formatierte Videodaten und formatierte Audiodaten umwandelt und die konvertierten Daten zu dem ersten Decoder (420) sendet.

13. Kombinationsvorrichtung nach Anspruch 12, wobei der erste Decoder (420) so konfiguriert ist, dass er die formatierten Videodaten und die formatierten Audiodaten empfängt und die Daten als Video und Audio ausgibt.

14. Kombinationsvorrichtung nach Anspruch 10, wobei die Host-Einrichtungs-Schnittstellenanpassungseinrichtung (130) eine ATA-Anpassungseinrichtung (advanced technology attachment adjuster) umfasst, die die Datenkommunikation über eine ATA-Paketschnittstelle durchführt.

15. Kombinationsvorrichtung nach Anspruch 14, wobei der erste Host-Einrichtungs-Schnittstellenteil (130) einen ersten ATA-Teil umfasst, der zweite Host-Einrichtungs-Schnittstellenteil (135) einen zweiten ATA-Teil umfasst und die Speichereinrichtung (131) ein SRAM ist.

16. Kombinationsvorrichtung nach einem der Ansprüche 11 bis 13, wobei die Multimedia-funktion eine DVD-Funktion umfasst, der erste Decoder (420) einen Decoder für komprimierte Daten umfasst, die Videodaten komprimierte digitale Videodaten umfassen, die Audiodaten komprimierte digitale Audiodaten umfassen, der Wandler (460) einen Datenformat-Wandler umfasst und der zweite Decoder (430) einen Multimediadecoder umfasst.

17. Kombinationsvorrichtung nach Anspruch 12, wobei die Speichereinrichtung (440) ein Festplattenlaufwerk umfasst, der Decoder (420) für komprimierte Daten einen MPEG-2-Decoder umfasst, die komprimierten digitalen Videodaten wenigsten Videodaten im JPEG- oder DIVX-Format umfassen, die komprimierten digitalen Audiodaten Audiodaten im MP3-Format umfassen, der Datenformat-Wandler einen Seriell-Parallel-Wandler (460) umfasst, die Einrichtung zum Anpassen von Schnittstellen von Host-Einrichtungen (465) eine ATA-Anpassungseinrichtung (advanced technology attachment adjuster) umfasst und der Multimediadecoder (430) einen DVD-Decoder umfasst.

18. Kombinationsvorrichtung nach Anspruch 17, wobei die formatierten Videodaten Videodaten im Format CCIR-656 umfassen und die formatierten Audiodaten Audiodaten im Inter-IC-Sound-Format umfassen.

## Revendications

1. Une méthode de communication de données pour un appareil de combinaison comprenant un premier dispositif hôte, un deuxième dispositif hôte et un ajusteur d'interface de dispositif hôte, l'ajusteur d'interface de dispositif hôte comprenant une première partie interface de dispositif hôte, une deuxième partie interface de dispositif hôte, un premier buffer, un second buffer et un dispositif de mémoire, la méthode comprenant :
réception (S200) par la première partie interface de dispositif hôte de l'ajusteur d'interface de dispositif hôte d'une commande de lecture du premier dispositif hôte ;
réception par la deuxième partie interface de dispositif hôte de l'ajusteur d'interface de dispositif hôte de la commande de lecture de la première partie interface de dispositif hôte ;
réception (S220) par le deuxième dispositif hôte de la commande de lecture de la deuxième partie interface de dispositif hôte;
réception (S240) par l'ajusteur d'interface de dispositif hôte de données correspondant à la commande de lecture du deuxième hôte et stockage temporaire des données dans le deuxième buffer ;
stockage par la deuxième partie interface de dispositif hôte des données temporairement stockées dans le deuxième buffer dans le dispositif de mémoire et transmission à la première partie interface de dispositif hôte d'un signal d'achèvement de stockage indiquant que les données ont été stockés dans le dispositif de mémoire ;
stockage temporaire par la première partie interface de dispositif hôte des données stockées dans le dispositif de mémoire dans le premier buffer ; et
lecture (S250) par le premier dispositif hôte des données du premier buffer.

2. La méthode revendiquée dans la revendication 1, dans laquelle la première partie interface de dispositif hôte transmets (S210) un signal d'occupation au premier dispositif hôte suite à la réception de la commande de lecture du premier dispositif hôte et efface le signal d'occupation du premier dispositif hôte suite au stockage temporaire des données dans le premier buffer.

3. Une méthode de communication de données pour un appareil de combinaison comprenant un premier dispositif hôte, un deuxième dispositif hôte et un ajusteur d'interface de dispositif hôte, l'ajusteur d'interface de dispositif hôte comprenant une première partie interface de dispositif hôte, une deuxième partie interface de dispositif hôte, un premier buffer, un deuxième buffer et un dispositif de mémoire, la méthode comprenant :
réception (S300) par la première partie interface de dispositif hôte de l'ajusteur d'interface de dispositif hôte d'une commande d'écriture du premier dispositif hôte ;
réception (S310) par l'ajusteur d'interface de dispositif hôte de données correspondant à la commande d'écriture du premier dispositif hôte et stockage temporaire des données dans le premier buffer ;
transmission par la première partie interface de dispositif hôte de la commande d'écriture à la deuxième partie interface de dispositif hôte de l'ajusteur d'interface de dispositif hôte, stockage des données temporairement stockées dans le premier buffer dans le dispositif de mémoire et transmission à la deuxième partie interface de dispositif hôte d'un signal d'achèvement de stockage indiquant que les données ont été stockées dans le dispositif de mémoire ;
stockage temporaire par la deuxième partie interface de dispositif hôte des données stockées dans le dispositif de mémoire dans le deuxième buffer et transmission (S330) de la commande d'écriture au deuxième dispositif hôte ; et
lecture (S340) par le deuxième dispositif hôte des données issues du deuxième buffer.

4. La méthode revendiquée dans la revendication 3 comprenant, de plus, le stockage (S350) par le deuxième dispositif hôte des données lues du deuxième buffer dans une deuxième partie de stockage.

5. La méthode revendiquée dans la revendication 3 ou 4, dans laquelle la première partie interface de dispositif hôte transmet (S320) un signal d'occupation au premier dispositif hôte suite à la réception de la commande d'écriture du premier dispositif hôte et efface le signal d'occupation lorsque les données stockées dans le deuxième buffer sont complètement transmises au deuxième dispositif hôte.

6. La méthode revendiquée dans l'une quelconque des revendications 1 à 4, dans laquelle l'ajusteur d'interface de dispositif hôte transmet et reçoit des données comme des données parallèles.

7. La méthode revendiquée dans la revendication 6 comprenant, de plus, si le premier dispositif hôte transmet et reçoit des données comme des données sérielles, la conversion des données sérielles, transmises du premier dispositif hôte à l'ajusteur d'interface de dispositif hôte, en données parallèles et conversion des données parallèles, transmises de l'ajusteur d'interface de dispositif hôte au premier dispositif hôte, en données sérielles.

8. Un appareil de combinaison comprenant :
un premier dispositif hôte (110) pour le contrôle d'un premier bloc de fonction pour exécuter une première fonction et pour la transmission de données vers et depuis une première partie stockage (100) ;
un deuxième dispositif hôte (150) pour le contrôle d'un deuxième bloc de fonction pour exécuter une deuxième fonction et pour la transmission de données vers et depuis une deuxième partie stockage (140) ; et
un ajusteur d'interface de dispositif hôte (130) pour réaliser une communication de données entre le premier dispositif hôte (110) et le deuxième dispositif hôte (150) dans lequel l'ajusteur d'interface de dispositif hôte (130) comprend :
une première partie interface de dispositif hôte (133) pour la communication avec le premier dispositif hôte (110) et une deuxième partie interface de dispositif hôte (135), la lecture de données d'un premier buffer (137) et d'un dispositif de mémoire (131) et le stockage de données dans le premier buffer (137) et le dispositif de mémoire (131) ;
la deuxième première partie interface de dispositif hôte (135) pour la communication avec le deuxième dispositif hôte et la première partie interface de dispositif hôte (135), la lecture des donnés d'un deuxième buffer (139) et du dispositif de mémoire (131) et le stockage des donnés dans le deuxième buffer (139) et le dispositif de mémoire (131) ;
le premier buffer (137) pour le stockage temporaire de données ;
le deuxième buffer (139) pour le stockage temporaire de données ; et
le dispositif de mémoire (131) pour le stockage ;
dans lequel l'appareil de combinaison est configuré pour exécuter la méthode d'une quelconque des revendications 1 à 7.

9. L'appareil de combinaison revendiqué dans la revendication 8, dans lequel l'ajusteur d'interface de dispositif hôte (130) est configuré pour transmettre et recevoir des données via une interface de données parallèles.

10. L'appareil de combinaison revendiqué dans la revendication 9, comprenant de plus, un convertisseur (120) pour, si le premier dispositif hôte (110) est configuré pour transmettre et recevoir des données comme des données sérielles, la conversion des données sérielles, transmises du premier dispositif hôte (110) à l'ajusteur d'interface de dispositif hôte (130), en données parallèles et la conversion de données parallèles, transmises de l'ajusteur d'interface de dispositif hôte (130) au premier dispositif hôte (110), en données sérielles.

11. L'appareil de combinaison revendiqué dans la revendication 10, dans lequel l'appareil de combinaison est un boitier adaptateur ayant une fonction multimédia
la première partie de stockage (100) comprend une mémoire (440) pour stocker au moins l'une des données vidéo et des données audio, le premier dispositif hôte (110) comprend un premier décodeur (420) pour lire au moins une donnée des données vidéo et des données audio de la mémoire (440), et le deuxième dispositif hôte (150) comprend
un deuxième décodeur (430) pour recevoir les données via l'ajusteur d'interface de dispositif hôte (130 ; 465).

12. L'appareil de combinaison revendiqué dans la revendication 11, dans lequel le deuxième décodeur (430) est configuré pour convertir les données en données vidéo formatées et données audio formatées, et transmettre les données converties au premier décodeur (420).

13. L'appareil de combinaison revendiqué dans la revendication 12, dans lequel le premier décodeur (420) est configuré pour recevoir les données vidéo formatées et les données audio formatées et rendre les données comme une vidéo ou un son.

14. L'appareil de combinaison revendiqué dans la revendication 10, dans lequel l'ajusteur d'interface de dispositif hôte (130) comprend un ajusteur advanced technology attachement ATA, qui réalise la communication de données via une interface ATA.

15. L'appareil de combinaison revendiqué dans la revendication 14, dans lequel la première partie interface de dispositif hôte (133) comprend une première partie ATA, la deuxième partie interface de dispositif hôte (135) comprend une deuxième partie ATA et le dispositif de mémoire (131) est une SRAM.

16. L'appareil de combinaison revendiqué dans l'une quelconque des revendications 11 à 13, dans lequel la fonction multimédia comprend une fonction DVD, le premier décodeur (420) comprend un décodeur de données compressées, les données vidéo comprennent des données vidéo numériques compressées, les données audio comprennent des données audio numériques compressées, le convertisseur (460) comprend un convertisseur de format de données, et le deuxième décodeur (430) comprend un décodeur multimédia.

17. L'appareil de combinaison revendiqué dans la revendication 12, dans lequel le dispositif de mémoire (440) comprend un lecteur de disque dur, le décodeur de données compressées (420) comprend un décodeur MPEG-2, les données vidéo numériques compressées comprennent au moins une des données vidéo au format JPEG et DIVX, les données audio compressées comprennent des données audio au format MP3, le convertisseur de format de données comprend un convertisseur de série en parallèle (460), l'ajusteur d'interface de dispositif hôte (465) comprend un ajusteur advanced technology attachment et le décodeur multimédia (430) comprend un décodeur DVD.

18. L'appareil de combinaison revendiqué dans la revendication 17, dans lequel les données vidéo formatées comprennent des données vidéo au format international radio consultative committee 656 et les données audio formatées comprennent des données audio au format inter-IC sound.
